# EUROPEAN PATENT APPLICATION

(11) **EP 4 134 832 A1**
(43) Date of publication of application: **15.02.2023**
(21) Application number: 21191180.5
(22) Date of filing: 13.08.2021
(51) Int. Cl.: G06F 15/177, G06F 9/4401, G06F 13/38

(54) **ENHANCING FUNCTIONALITY OF A LIMITED-RESOURCE APPARATUS**

(71) Applicant: Nokia Technologies Oy, 02610 Espoo (FI)
(72) Inventor: VERDOT, Vincent, 91650 Saint-Yon (FR); DOUVILLE, Richard, 91310 Leuville sur Orge (FR)
(74) Representative: Swindell & Pearson Limited

(57) **Abstract**

An apparatus 1 comprising means for:
forming one or more electrical connections 5 with an attachment 3;
controlling candidate-specific signaling 9 on the one or more electrical connections 5 to provide one or more commands in a form specific to a candidate for the attachment 3;
confirming, based on a response 11 of the attachment 3 to the candidate-specific signaling 9, an identity of the attachment as the candidate for the attachment 3; and
loading attachment-specific code 13, dependent upon the identity of the attachment, to configure the apparatus 1 to access one or more functions of the attachment 2.

## Description

### TECHNOLOGICAL FIELD

Embodiments of the present disclosure relate to apparatus with limited resources and enhancing their functionality.

### BACKGROUND

Limited-resource apparatus are apparatus with limited processing and/or memory resources. Such apparatus are often used for performing specific functions at low cost and with low power consumption. They can be implemented using a microcontroller.

Sometimes, they are programmed only once for dedicated use in a single application.

At present, the functionality is generally enhanced by replacing the apparatus with a new apparatus.

### BRIEF SUMMARY

According to various, but not necessarily all, embodiments there is provided an apparatus comprising means for:
forming one or more electrical connections with an attachment;
controlling candidate-specific signaling on the one or more electrical connections to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the apparatus to access one or more functions of the attachment.

In some but not necessarily all examples, the one or more functions of the attachment are not accessible without the attachment-specific code.

In some but not necessarily all examples, the candidate-specific form of the one or more commands is unique to a pool of a plurality of candidate attachments.

In some but not necessarily all examples, the means are further configured to perform determining if the response of the attachment to the candidate-specific signaling matches an expected response of the candidate for the attachment to the one or more commands.

In some but not necessarily all examples, the means are further configured to perform identifying the attachment as the candidate if the response of the attachment to the candidate-specific signaling matches an expected response of the candidate for the attachment to the one or more commands,

In some but not necessarily all examples, the means are further configured to perform controlling the candidate-specific signaling on the one or more electrical connections to provide one or more commands in a form specific to a different candidate for the attachment, if the response of the attachment to the candidate-specific signaling does not match an expected response of the candidate for the attachment to the one or more commands.

In some but not necessarily all examples, the means are further configured to perform communicating with a server to obtain, from the server, the attachment-specific code which, when loaded, configures the apparatus to access functions of the attachment.

In some but not necessarily all examples, the means are further configured to perform receiving, from the server, instructions indicating the form of the one or more commands which is specific to the candidate for the attachment.

In some but not necessarily all examples, the instructions relating to a first subset of candidates are received at a first time and the instructions relating to a second subset of candidates are received at a second time, wherein the second time is a time after it is determined that the attachment is not one of the candidates of the first subset.

In some but not necessarily all examples, the means are further configured to perform:
receiving, from the server, an expected response of the candidate for the attachment to the one or more commands;
comparing the response of the attachment to the candidate-specific signaling, with the expected response; and
reporting a result of the comparison to the server to enable the server to identify the attachment-specific code.

In some but not necessarily all examples, the means are further configured to perform detecting that one or more electrical connections with an attachment have been formed and controlling candidate-specific signaling on the one or more electrical connections in response.

In some but not necessarily all examples, the candidates for the attachment are based upon one or more of:
user input indicating a category of the attachment;
number of electrical connections formed with the attachment;
states of the one or more electrical connections; or
a protocol used by the attachment.

According to various, but not necessarily all, embodiments there is provided a method comprising:
controlling candidate-specific signaling on one or more electrical connections, formed between an apparatus and an attachment, to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the apparatus to access one or more functions of the attachment.

In some but not necessarily all examples, the one or more functions of the attachment are not accessible without the attachment-specific code.

According to various, but not necessarily all, embodiments there is provided executable code that, when run on a computer, performs:
controlling candidate-specific signaling on one or more electrical connections, formed with an attachment, to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the computer to access functions of the attachment.

In some but not necessarily all examples, the one or more functions of the attachment are not accessible without the attachment-specific code.

According to various, but not necessarily all, embodiments there is provided a system comprising:
an apparatus;
a server shared by the apparatus and other apparatuses for enabling transfer of attachment-specific code to the apparatus and the other apparatuses;
an attachment for physical connection to the apparatus;
the system comprising means for:
   forming one or more physical connections between the apparatus and the attachment for electrical signaling;
   determining, at the server or the apparatus, a candidate for the attachment from a pool of candidates for the attachment;
   at the apparatus, controlling candidate-specific signaling to the attachment on the one or more electrical connections to provide one or more commands to the attachment in a form specific to the determined candidate for the attachment, the form being unique amongst the pool of candidates for the attachment;
   at the apparatus, detecting a response of the attachment to the candidate-specific signaling;
   at the server and/or the apparatus, determining if the response of the attachment to the candidate-specific signaling matches an expected response of the candidate for the attachment to the candidate-specific signaling and, if so, identifying the attachment as the candidate for the attachment;
   at the server, identifying attachment-specific code dependent upon the identification of the attachment as the candidate for the attachment and providing the attachment-specific code to the apparatus; and
   at the apparatus, loading the provided attachment-specific code to configure the apparatus to access one or more functions of the attachment.

In some but not necessarily all examples, the one or more functions of the attachment are not accessible without the attachment-specific code.

According to various, but not necessarily all, embodiments there is provided server apparatus system for enabling transfer of attachment-specific code to apparatuses comprising:
means for communicating separately with multiple apparatuses configured to form one or more physical connections between the respective apparatus and a respective attachment for electrical signaling between the respective apparatus and the respective attachment;
determining, at the server a pool of candidates for the attachment or a candidate for the attachment from a pool of candidates for the attachment;
providing candidate-specific signaling to the apparatus for the determined candidate for the attachment or for each candidate for the attachment in the determined pool of attachments, each candidate-specific signaling comprising one or more commands in a form specific to the determined candidate for the attachment,
providing candidate-specific expected responses to the candidate-specific signaling to the apparatus for the determined candidate for the attachment or for each candidate for the attachment in the determined pool of attachments, each candidate-specific expected response enabling determination at the apparatus if a response of the attachment to the respective candidate-specific signaling matches a respective expected response of the candidate for the attachment to the candidate-specific signaling to identify the attachment as the candidate for the attachment;
receiving from the apparatus attachment-specific signaling identifying the attachment;
accessing attachment-specific code dependent upon the identification of the attachment and providing the attachment-specific code to the apparatus to cause the apparatus to load the provided attachment-specific code to configure the apparatus to access one or more functions of the attachment

In some but not necessarily all examples, the one or more functions of the attachment are not accessible to the apparatus without the provided attachment-specific code.

In some but not necessarily all examples, the means comprises a microcontroller configured to cause the performance of the apparatus.

In some but not necessarily all examples, the means comprises at least one processor; and at least one memory including executable code, the at least one memory and executable code configured to, with the at least one processor, cause the performance of the apparatus.

According to various, but not necessarily all, embodiments there is provided examples as claimed in the appended claims.

The scope of protection sought for various embodiments of the invention is set out by the independent claims. The examples and features, if any, described in this specification that do not fall under the scope of the independent claims are to be interpreted as examples useful for understanding various embodiments of the invention.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10A shows another example of the subject matter described herein;
FIG. 10B shows another example of the subject matter described herein.

### DETAILED DESCRIPTION

In the following there is described examples of an apparatus 1 comprising means for: forming one or more electrical connections 5 with an attachment 3, such as an attachment device 3;
controlling candidate-specific signaling 9 on the one or more electrical connections 5 to provide one or more commands in a form specific to a candidate 23 for the attachment 3;
confirming, based on a response 11 of the attachment 3 to the candidate-specific signaling 9, an identity of the attachment 3 as the candidate 23 for the attachment 3; and
loading attachment-specific code 13, dependent upon the identity of the attachment 3 to configure the apparatus 1 to access one or more functions of the attachment 3. In some instances, the one or more functions of the attachment 3 are not accessible without the attachment-specific code.

In this way, the apparatus 1 provides a probe to a new attachment 3 and receives in reply a response, where the pairing of the probe-response can provide information on the identity of the new attachment 3. The probe (candidate-specific signaling 9) is specific to the candidate 23 for the attachment 3 (a putative/possible attachment). The response can be specific or non-specific. However, the pairing of the probe and response is sufficiently specific to confirm the identity of the attachment 3 as the candidate 23 for the attachment 3 or confirm the identity of the attachment 3 as not the candidate 23 for the attachment 3. The identity of the attachment 3 is used to load attachment-specific code 13 at the apparatus 1 to, at least partly, re-configure the apparatus 1. The newly reconfigured apparatus 1 can now access one or more functions of the attachment 3 that were not accessible without the reconfiguration by the attachment-specific code 13.

In some examples, the attachment-specific code is obtained from a remote server 17.

In some examples, information 25 configuring the probe (candidate-specific signaling 9) and/or information configuring the expected response 51 to the probe can be obtained from the remote server 17 or a different server.

In some examples, a remote server 17 can provide, to multiple apparatuses 1, services comprising supplying attachment-specific code 13, and configuring probes (candidate-specific signaling 9) and/or the expected response 51 to the probes.

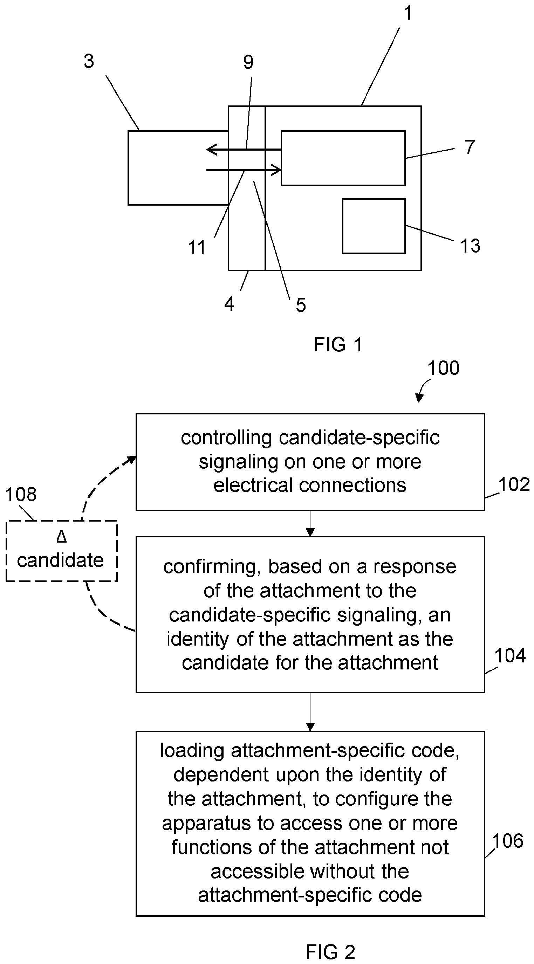

FIG 1 illustrates an example of an apparatus 1.

The apparatus comprises an interface 4 for forming one or more electrical connections 5 with an attachment 3.

The apparatus 1 comprises a controller 7 for controlling candidate-specific signaling 9 on the one or more electrical connections 5 to provide one or more commands in a form specific to a candidate for the attachment 3, for confirming, based on a response 11 of the attachment 3 to the candidate-specific signaling 9, an identity of the attachment 3 as the candidate for the attachment 3; and for loading/receiving attachment-specific code 13, dependent upon the identity of the attachment 3 to configure the apparatus 1 to access one or more functions of the attachment 3 not accessible without the attachment-specific code 13.

In at least some examples, the interface 4 for forming one or more electrical connections 5 with an attachment 3 is a physical interface that forms physical interconnections with a corresponding interface of an attachment 3. The physical interconnections are used for the electrical connections 5 with an attachment 3. In at least some examples, each physical interconnection provides an electrical connection. For example, input/output (I/O) pins can be used to form the physical interconnections and provide the electrical connections 5. The I/O pins form one or more physical interconnections between the apparatus 1 and the attachment 3 for electrical signaling.

In at least some examples, there is a pool (a set) of candidates. The pool comprises a plurality of candidates for the attachment 3.

There is candidate-specific signaling 9 for each candidate in the pool. The candidate-specific signaling comprises N commands where N ≥1. The N commands are provided in a candidate-specific form.

The candidate-specific form of the N commands is unique to the pool of the plurality of candidates 23. That is, the candidate-specific form for one candidate 23 is not shared with another candidate 23 in the pool.

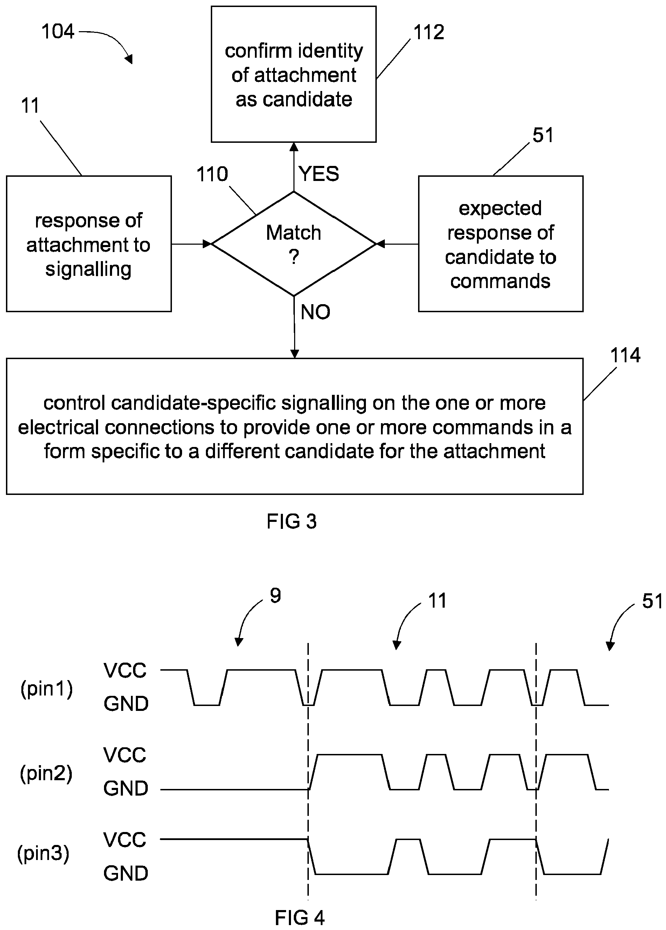

As illustrated in FIG 4, the candidate-specific signaling 9 is physical layer signaling. The candidate-specific signaling 9 in FIG 4 is, for example, voltage level signaling.

Control of candidate-specific signaling 9 on the one or more electrical connections 5 to provide one or more commands in a form specific to a candidate 23 for the attachment 3 is achieved, for example, by controlling time-variation of voltage levels on one or more general purpose I/O pins. This can be achieved by periodically pulling a voltage to a HIGH level and pulling the voltage to a LOW level. Multiple commands have a form characterized by a sequence of time-varying voltage signals.

As illustrated in FIG 4 an electrical connection 5, for example "pin 1" or "pin 3", can be used first to provide candidate-specific signaling 9 to the attachment 3 from the apparatus 1 and then subsequently used to provide a response 11 from the attachment 3 to the apparatus 1.

As illustrated in FIG 4 an electrical connection 5, for example a "pin 2", that is connected but not used first to provide candidate-specific signaling 9 to the attachment 3 from the apparatus 1 can be subsequently used to provide a response 11 from the attachment 3 to the apparatus 1.

The apparatus 1 can, for example, be a microcontroller, a single-board computer (SBC), a processor and/or circuitry, or any combination thereof, with one or more electrical connections, such as I/O pins. In some examples, the apparatus can be any computer apparatus, such as a wireless communication device and/or an loT (Internet-of-Things) device, with one or more electrical connections, such as I/O pins. In some instances, the apparatus 1 is without an operating system and does not have a device discovery mechanism.

The attachment 3 is a hardware module/extension for augmenting functionality of the apparatus 1. It can be a sensor module/device, a communication module/device, a memory module/device, a battery module/device, a power source module/device, a user interface module/device, a user input module/device, loT module/device, etc. or any combination thereof. The attachment 3 can be implemented with or without its own one or more processors, memories and computer program code, that are together configured to cause the attachment to function based on the one or more computer program code.

FIG 2 illustrates an example of a method 100 that enables functionality of the apparatus 1 to be extended by connecting an attachment 3. The attachment 3 can be a removable or replaceable attachment.

The method 100 re-configures the apparatus 1 to access one or more functions of the attachment 3 not previously accessible by loading attachment-specific code 13 at the apparatus 1.

At block 102, the method 100 comprises controlling candidate-specific signaling 9 on one or more electrical connections 5, formed between the apparatus 1 and the attachment 3, to provide one or more commands in a form specific to a candidate for the attachment 3.

At block 104, the method 100 comprises confirming, based on a response 11 of the attachment 3 to the candidate-specific signaling 9, an identity of the attachment 3 as the candidate 23 for the attachment 3.

At block 106, the method 100 comprises loading attachment-specific code 13, dependent upon the identity of the attachment 3, to configure the apparatus 1 to access one or more functions of the attachment 3. In some instances, the attachment 3 is not accessible without the attachment-specific code 13 installed/configured in the apparatus 1.

If an identity of the attachment as the candidate for the attachment 3 cannot be confirmed, the method 100 can be restarted 108 at block 102 in respect of a different candidate for the attachment 3. Block 102 then controls candidate-specific signaling on one or more electrical connections 5 to provide one or more commands in a form specific to a different candidate 23 for the attachment 3.

As the candidate-specific signaling 9 provides one or more commands in a form specific to a candidate 23 for the attachment 3, then if the candidate 23 changes, the candidate-specific signaling 9 is different and provides one or more commands in a different form specific to the new candidate 23 for the attachment 3.

It is possible for the candidate-specific signaling 9 to be different and use the same or different one or more electrical connections 5.

It is possible for the candidate-specific signaling 9 to be different and command, logically, the same or different functions. However, the candidate-specific signaling 9 is physically different (different at the physical layer) having a form specific to the new candidate for the attachment 3.

The method 100 can loop through blocks 102, 104, 108 until a pool of available candidate attachments is exhausted or identity of the attachment 3 is confirmed as the identity of the current candidate 23 for the attachment 3 at block 104.

FIG 3 illustrates in more detail block 104. At block 104, the method comprises detecting a response 11 of/from the attachment 3 to the candidate-specific signaling 9, which provide one or more commands in a form specific to a candidate 23 for the attachment 3. The response 11 enables confirmation of an identity of the attachment 3 as the candidate 23 for the attachment 3.

At sub-block 110, the method comprises determining if the response 11 of the attachment 3 to the candidate-specific signaling 9 matches an expected response 51 of the candidate for the attachment 3 to the one or more commands.

If the response 11 of the attachment 3 to the candidate-specific signaling 9 matches the expected response 51 of the candidate 23 for the attachment 3 to the one or more commands, the method moves to sub-block 112 where the attachment 3 is identified as the candidate. The candidate identity is confirmed as the true identity enabling the loading and/or storing of attachment-specific code 13, dependent upon the identity of the attachment 3, to configure the apparatus 1 to access one or more functions of the attachment 3, that may not be accessible without the attachment-specific code 13.

If the response 11 of the attachment 3 to the candidate-specific signaling 9 does not match the expected response 51 of the candidate 23 for the attachment 3 to the one or more commands, the method moves to sub-block 114 and the attachment 3 is identified as NOT the candidate. The candidate identity is confirmed as NOT the true identity. The method controls candidate-specific signaling 9 on one or more electrical connections 5 to provide one or more commands in a form specific to a different candidate 23 for the attachment 3. This can for example be achieved by the method 100 being restarted 108 at block 102 in respect of a different candidate 23 for the attachment 3. Block 102 then controls candidate-specific signaling on one or more electrical connections 5 to provide one or more commands in a form specific to a different candidate 23 for the attachment 3. The method 100 can loop through blocks 102, 104, 108 until a pool of available candidate attachments is exhausted or identity of the attachment is confirmed as the identity of the current candidate 23 for the attachment 3 at sub-block 110 of block 104.

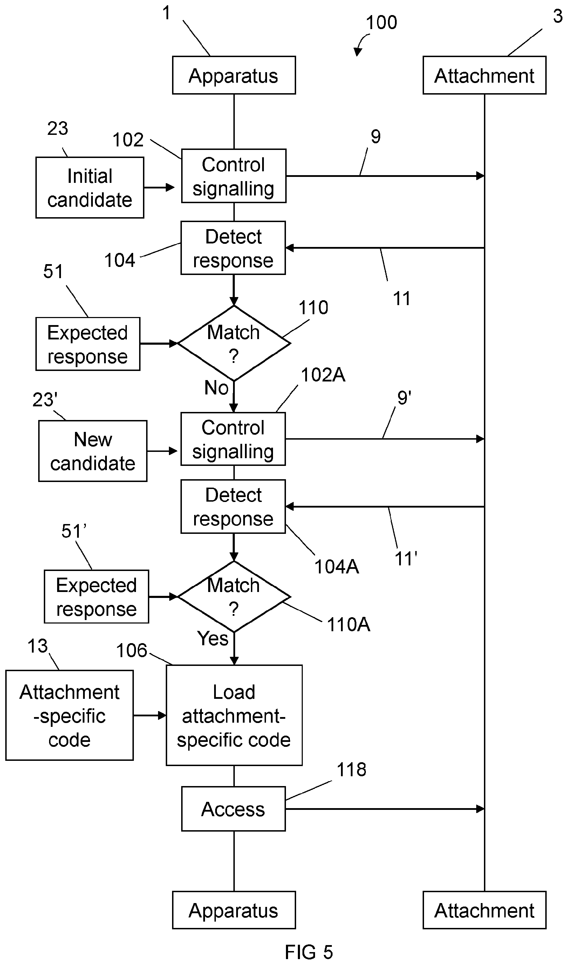

FIG 5 illustrates an example of the method 100 that enables functionality of an apparatus 1 to be extended by connecting an attachment 3. The attachment 3 can be a removable or replaceable attachment.

The method configures the apparatus 1 to access 118 one or more functions of the attachment 3 not previously accessible by loading attachment-specific code 13 at the apparatus 1.

At block 102, the method 100 comprises controlling candidate-specific signaling 9 on one or more electrical connections 5, formed between the apparatus 1 and the attachment 3, to provide one or more commands in a form specific to a candidate for the attachment 3.

At block 104, the method 100 comprises detecting a response 11 of the attachment 3 to the candidate-specific signaling 9.

At block 110, the detected response 11 is used to attempt to confirm an identity of the attachment 3 as the candidate 23 for the attachment 3. It is determined if the response 11 of the attachment 3 to the candidate-specific signaling 9 matches an expected response 51 of the candidate for the attachment 3 to the one or more commands.

If the response 11 of the attachment 3 to the candidate-specific signaling 9 does not match an expected response 51 of the candidate 23 for the attachment 3 to the one or more commands, the method abandons the current candidate 23 for the attachment and selects a new, different candidate 23' for the attachment and will control candidate-specific signaling 9' on one or more electrical connections 5 to provide one or more commands in a form specific to the new, different candidate 23' for the attachment 3.

At block 102A, the method 100 comprises controlling candidate-specific signaling 9' on one or more electrical connections 5, formed between the apparatus 1 and the attachment 3, to provide one or more commands in a form specific to the candidate 23' for the attachment 3.

At block 104A, the method 100 comprises detecting a response 1 1' of the attachment 3 to the candidate-specific signaling 9' of block 102A.

At block 110A, the detected response 11' is used to attempt to confirm an identity of the attachment 3 as the candidate 23' for the attachment 3. It is determined if the response 11' of the attachment 3 to the candidate-specific signaling 9' matches an expected response 51' of the candidate 23' for the attachment 3 to the one or more commands.

If the response 11' of the attachment 3 to the candidate-specific signaling 9' does match the expected response 51' of the candidate 23' for the attachment 3 to the one or more commands, the attachment 3 is identified as the candidate. The candidate identity is confirmed as the true identity enabling, at block 106, the loading/storing of attachment-specific code 13, dependent upon the identity of the attachment 3, to configure the apparatus 1 to access one or more functions of the attachment 3 not accessible without the attachment-specific code 13.

At block 118, the apparatus 1 accesses one or more functions of the attachment 3 which may not be accessible without the attachment-specific code 13.

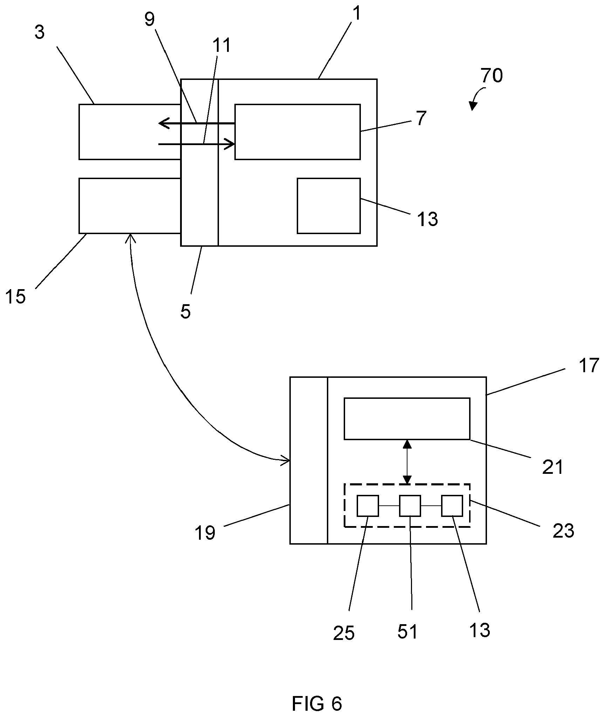

FIG 6 illustrates an apparatus 1 and an attachment 3 as previously described. The FIG additionally illustrates a server 17. The server 17, apparatus 1 and the attachment 3 together form a system 70.

The server 17 can be used to augment the functionality of the apparatus 1 by communicating with the apparatus 1. For example, the attachment-specific code 13 can be provided by the server 17. For example, the candidate-specific signaling 9 can be provided by the server 17. For example, the expected response 51 can be provided by the server 17.

In the example illustrated, the apparatus 1 is configured to communicate wirelessly with the server. In some examples the server 17 is configured for direct wireless communication with the apparatus 1 and in other examples the server 17 is configured for indirect wireless communication with the apparatus 1 via a network or proxy. In the particular example illustrated, the apparatus 1 comprises a radio transceiver 15 configured for direct communication with a radio transceiver 19 of the server 17.

The apparatus 1 is configured to obtain, from the server 17, the attachment-specific code 13 which, when loaded in the apparatus 1, configures the apparatus 1 to access functions of the attachment 3, which may not be accessible without the attachment-specific code 13.

The apparatus 1 can be configured to receive, from the server, instructions 25 for defining candidate-specific signaling 9, for example, indicating the form and/or list of the one or more commands which is specific to the candidate 23 for the attachment 3. In some examples, the instructions 25 specify the form of the one or more commands which is specific to the candidate 23 for the attachment 3

The apparatus 1 can be configured to receive, from the server 17, an expected response 51 of the candidate 23 for the attachment 3 to the form of the one or more commands, which is specific to the candidate 23 for the attachment 3. The apparatus 1 compares/matches the response 11 of the attachment 3 to the candidate-specific signaling with the expected response 51. In this way, the expected response 51 is used to determine if the response 11 of the attachment 3 to the candidate-specific signaling 9 matches an expected response 51 of the candidate 23 for the attachment 3 to the one or more commands. The apparatus 1 is configured to report a result of the comparison/matching to the server 17 to enable the server to identify the correct attachment-specific code 13.

FIG 6 is therefore illustrative of an example of a system 70 comprising:
an apparatus 1;
a server 17 for enabling transfer of attachment-specific code 13 to the apparatus 1;
an attachment 3 for physical connection to the apparatus 1;
the system 70 comprising means for:
   forming one or more physical connections between the apparatus 1 and the attachment 3 for electrical signaling;
   determining, at the server 17 or the apparatus 1, a candidate 23 for the attachment 3;
at the apparatus 1, controlling candidate-specific signaling 9 to the attachment 3 on the one or more electrical connections 5 to provide one or more commands to the attachment 3 in a form specific to the determined candidate 23 for the attachment 3; at the apparatus 1, detecting a response 11 of the attachment 3 to the candidate-specific signaling;
at the server and/or the apparatus 1, determining if the response 11 of the attachment 3 to the candidate-specific signaling 9 matches an expected response 51 of the candidate 23 for the attachment 3 to the candidate-specific signaling 9 and, if so, identifying the attachment 3 as the candidate 23 for the attachment 3;
at the server, identifying attachment-specific code 13 dependent upon the identification of the attachment 3 as the candidate 23 for the attachment 3 and providing the attachment-specific code 13 to the apparatus 1; and at the apparatus 1, loading the provided attachment-specific code 13 to configure the apparatus 1 to access one or more functions of the attachment 3, which may not be accessible without the provided attachment-specific code 13.

The candidate 23 for the attachment 3 can be selected from a pool of candidates 21 for the attachment. The form of one or more commands provided by the candidate-specific signaling 9 is unique for the attachment 3 amongst the pool of candidates 21. In at least some examples, the server 17 is shared by the apparatus 1 and other apparatuses 1 for enabling transfer of attachment-specific code 13 to the apparatus 1 and the other apparatuses 1 as described above. Each of the apparatuses 1 can operate as described above and the server 17 can operate independently, as described above, for each apparatus 1.

The server 17 can therefore communicate separately with multiple apparatuses 1, for example, using radio transceiver 19 and/or via a wired network. Each apparatus 1 is configured to form one or more physical connections 5 between the respective apparatus 1 and a respective attachment 3 for electrical signaling between the respective apparatus 1 and the respective attachment 3.

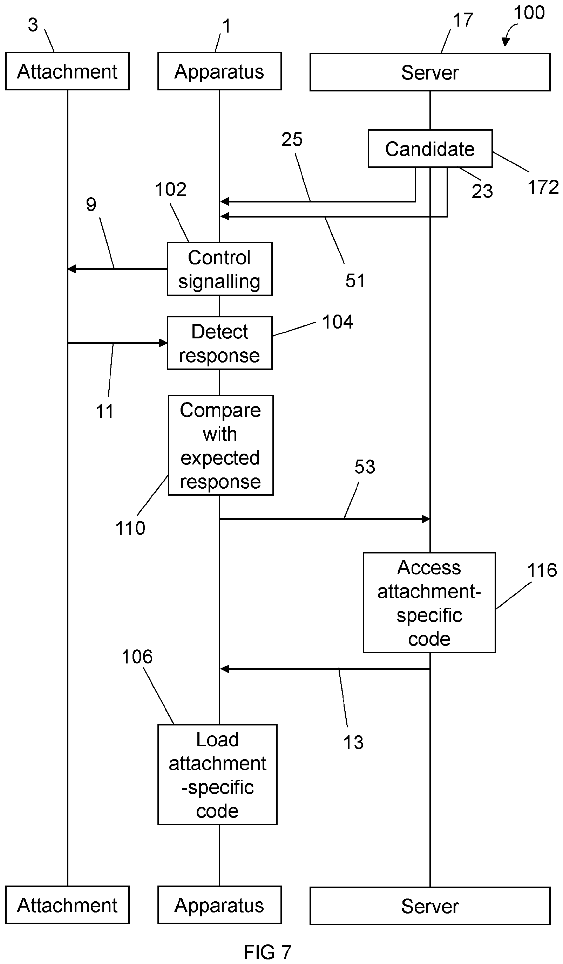

FIG 7 illustrates an example of the method 100 when the apparatus 1 can communicate with the server 17.

At block 172, the server 17 determines, for example, after receiving / in response to a request from the apparatus 1, a candidate 23 for the attachment 3 from a pool of candidates for the attachment 3 and provides, to the apparatus 1, instructions 25 for defining candidate-specific signaling 9 for the determined candidate 23 and candidate-specific expected responses 51 to the candidate-specific signaling 9 for the determined candidate 23 for the attachment 3. The candidate-specific signaling 9 comprises one or more commands in a form specific to the determined candidate 23 for the attachment 3. The candidate-specific expected response 51 enables determination, e.g. by comparing, at the apparatus 1, if a response 11 of the attachment 3 to the respective candidate-specific signaling 9 matches a respective expected response 51 of the candidate 23 for the attachment 3 to the candidate-specific signaling 9 to identify the attachment 3 as the candidate 23 for the attachment 3.

The blocks 102, 104, 110 are as previously described. In this example, the response 11 of the attachment 3 to the candidate-specific signaling 9 matches the expected response 51 of the candidate 23 for the attachment 3 to the one or more commands, and the attachment 3 is identified as the candidate. The candidate identity is confirmed as the true identity.

The apparatus 1 sends to the server attachment-specific signaling 53 identifying the attachment 3.

The server 17 receives from the apparatus 1 attachment-specific signaling 53 identifying the attachment 3, accesses 116 attachment-specific code 13 dependent upon the identification of the attachment 3 and provides the attachment-specific code 13 to the apparatus 1 to cause the apparatus 1 to load 106 the provided attachment-specific code 13 to configure the apparatus 1 to access one or more functions of the attachment 3 not accessible to the apparatus 1 without the provided attachment-specific code 13.

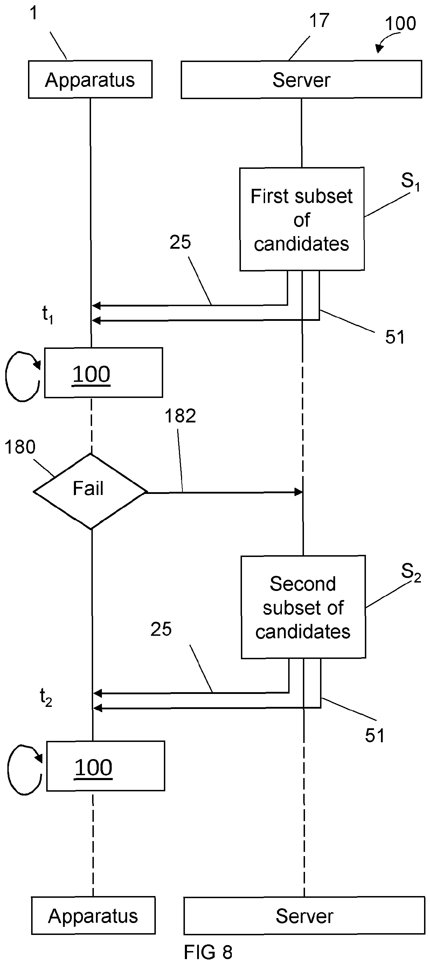

In some examples, for example as illustrated in FIG 8, the server 17 provides, to the apparatus 1, instructions 25 for defining candidate-specific signaling 9 for each candidate 23 in the pool of candidates. Each candidate-specific signaling 9 comprises one or more commands in a form specific to a candidate 23 for the attachment 3.

The server 17 also provides, to the apparatus 1, candidate-specific expected responses 51 to the candidate-specific signaling 9 for each candidate 23 in the pool. Each candidate-specific expected response 51 enables determination at the apparatus 1 if a response 11 of the attachment 3 to the respective candidate-specific signaling 9 matches a respective expected response 51 of the candidate 23 for the attachment 3 to the candidate-specific signaling 9 to identify the attachment 3 as the candidate 23 for the attachment 3.

This allows the batch processing of the pool of candidates by the apparatus 1.

In FIG 8, at a first time ti, the server provides instructions 25 for defining candidate-specific signaling 9 to the apparatus 1 for each candidate 23 for the attachment 3 in a first subset S₁ of candidate attachments and provides candidate-specific expected responses 51 to the candidate-specific signaling 9 to the apparatus 1 for each candidate 23 for the attachment 3 in the first subset S₁ of candidate attachments. Each candidate-specific signaling 9 comprises one or more commands in a form specific to the determined candidate 23 for the attachment 3. Each candidate-specific expected response 51 enables determination at the apparatus 1 if a response 11 of the attachment 3 to the respective candidate-specific signaling 9 matches a respective expected response 51 of the candidate 23 for the attachment 3 to the candidate-specific signaling 9 to identify the attachment 3 as the candidate 23 for the attachment 3. This allows the batch sequential processing of the first subset S₁ of candidate attachments by the apparatus 1 as enabled, for example, by the loop 108 in FIG 2.

If none of the candidates 23 for the attachment 3 in the first subset S₁ of candidate attachments are confirmed as the attachment, the apparatus requests 182 at block 180 more candidates.

The server, at a second time t₂ after the first time, provides instructions 25 for defining candidate-specific signaling 9 to the apparatus 1 for each candidate 23 for the attachment 3 in a second subset S₂ of candidate attachments and provides candidate-specific expected responses 51 to the candidate-specific signaling 9 to the apparatus 1 for each candidate 23 for the attachment 3 in the second subset S₂ of candidate attachments. The first subset S₁ and the second subset S₂ do not intersect. Each candidate-specific signaling 9 comprises one or more commands in a form specific to the determined candidate 23 for the attachment 3. Each candidate-specific expected response 51 enables determination at the apparatus 1 if a response 11 of the attachment 3 to the respective candidate-specific signaling 9 matches a respective expected response 51 of the candidate 23 for the attachment 3 to the candidate-specific signaling 9 to identify the attachment 3 as the candidate 23 for the attachment 3. This allows the batch sequential processing of the second S₂ and more subsets of candidate attachments by the apparatus 1 as enabled, for example, by the loop 108 in FIG 2.

A subset Sᵢ of candidate attachments can comprise Mᵢ candidates 23 for the attachment 3, where Mᵢ ≥1. A subset Sᵢ of candidate attachments can therefore comprise one or more candidates 23 for the attachment 3.

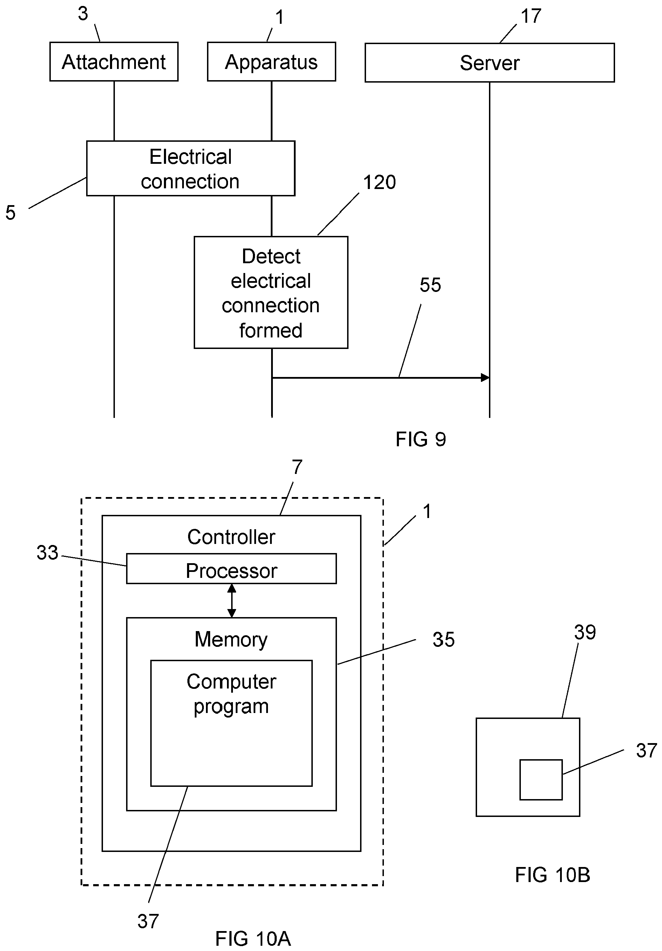

FIG 9 illustrates an example of initiation of the method 100.

The apparatus 1 is configured to detect 120 that one or more new electrical connections 5 have been formed at an interface 4, for I/O pins, used to connect an attachment 3 to the apparatus 1 and, in response to the detection, initiate the method 100.

In this example, where the apparatus 1 communicates with a server 17, the apparatus 1 can send a message 55 to the server 17.

The initial stage of the method 100 is to identify a suitable candidate. This can be performed solely at the apparatus 1, solely at a server 17 or jointly between the apparatus 1 and the server, for example, the server can identify a pool of candidates and the apparatus can identify an initial candidate from the pool.

The initial candidates for the attachment 3, or the pool of candidates for the attachment, can be based upon one or more of:
user input at the apparatus or to the server 17 indicating a category of the attachment 3;
a number of electrical connections 5 formed with the attachment 3 e.g., how many I/O pins are used;
a physical arrangement of electrical connections 5 formed with the attachment 3 e.g. which I/O pins are used;
voltage states of the one or more electrical connections 5; or
a protocol used by the attachment 3.

The apparatus 1 can be configured to determine a protocol used by the attachment 3 by:
controlling non-candidate-specific signaling on the one or more electrical connections 5 according to a putative protocol and in a form not specific to a candidate 23 for the attachment 3 but generic to multiple candidates for the attachment 3; and
detecting if the attachment 3 responds to the non-candidate-specific signaling with a specific response according to the candidate protocol. Thus, protocol determination uses a non-specific probe and a specific response 11 (not a specific probe and response).

Fig 10A illustrates an example of the controller 7 of the apparatus 1. Implementation of a controller 7 may be as one or more controller circuitries/processors 33. The controller 7 may be implemented in hardware alone, have certain aspects in software including firmware alone or can be a combination of hardware and software (including firmware).

As illustrated in Fig 10A the controller 7 may be implemented using instructions that enable hardware functionality, for example, by using executable code 37, that may be stored on one or more computer readable storage medium 35 (disk, memory etc.), to be executed in one or more general-purpose or special-purpose processors 33.

The processor 33 is configured to read from and write to the memory 35. The processor 33 may also comprise an output interface via which data and/or commands are output by the processor 33 and an input interface via which data and/or commands are input to the processor 33.

The memory 35 stores a computer program, such as an executable code 37, comprising computer program instructions (computer program code),that controls the operation of the apparatus 1 when loaded into the processor 33. The executable code 37 provides the logic and routines that enables the apparatus to perform the methods illustrated in Figs 1 to 9. The processor 33 by reading the memory 35 is able to load and execute the executable code 37.

The apparatus 1 therefore comprises:
at least one processor 33; and
at least one memory 35 including executable code 37
the at least one memory 35 and the executable code 37 configured to, with the at least one processor 33, cause the apparatus 1 at least to perform:
   controlling candidate-specific signaling 9 on one or more electrical connections 5,
   formed between the apparatus 1 and the attachment 3, to provide one or more commands in a form specific to a candidate for the attachment 3;
   confirming, based on a response 11 of the attachment 3 to the candidate-specific signaling 9, an identity of the attachment 3 as the candidate 23 for the attachment 3; and
   loading attachment-specific code 13, dependent upon the identity of the attachment 3, to configure the apparatus 1 to access one or more functions of the attachment 3 not accessible without the attachment-specific code 13.

In general, the apparatus 1 therefore comprises:
at least one processor 33; and
at least one memory 35 including computer program 37,
the at least one memory 35 and the computer program 37 configured to, with the at least one processor 33, cause the apparatus 1 at least to perform based on the computer program 37, for example, the executable code 37.

As illustrated in Fig 10B, the computer program, such as an executable code 37, may be transported using any suitable delivery mechanism 39. The delivery mechanism 39 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the executable code 37. The delivery mechanism may be a signal configured to reliably transfer the executable code 37.

Executable code 37 causes an apparatus to perform at least the following or for performing at least the following:
controlling candidate-specific signaling on one or more electrical connections 5, formed with an attachment 3, to provide one or more commands in a form specific to a candidate 23 for the attachment 3;
confirming, based on a response 11 of the attachment 3 to the candidate-specific signaling 9, an identity of the attachment 3 as the candidate 23 for the attachment 3; and
loading attachment-specific code, dependent upon the identity of the attachment 3, to configure the apparatus to access functions of the attachment 3 not accessible without the attachment-specific code.

The executable code 37 may be comprised in a non-transitory computer readable medium, a computer program product, a machine-readable medium. In some but not necessarily all examples, the executable code 37 may be distributed over more than one computer program.

Although the memory 35 is illustrated as a single component/circuitry it may be implemented as one or more separate components/circuitry some or all of which may be integrated/removable and/or may provide permanent/semi-permanent/ dynamic/cached storage.

Although the processor 33 is illustrated as a single component/circuitry it may be implemented as one or more separate components/circuitry some or all of which may be integrated/removable. The processor 33 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, executable code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term, and all means, in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 2, 3, 5 and 7 to 9 may represent steps in a method and/or sections of code in the executable code 37. The illustration of a particular order to the blocks does not necessarily imply that there is a required or preferred order for the blocks and the order and arrangement of the block may be varied. Furthermore, it may be possible for some blocks to be omitted.

Referring back to the previous examples, the server 17 can be embedded in new or existing Internet of Things (loT) Hubs/servers (for example used in home automation, industrial automation, farming automation, etc.) or instantiated independently in the cloud or in edge-cloud/server/computer. It could also be embedded in an end-user device, for example, a mobile telephone/communication device, laptop, tablet, wireless access point/router, server, vehicle, etc. or any combination thereof.

An optional third-party component, a remote database can be used to store some or all of the data provided by the server 17 to the apparatus 1. The remote database can be shared by multiple servers 17. The data provided by the server 17 to the apparatus 1 can then be provided on request by the local server 17, possibly based on detected behavior and microcontroller type in the apparatus 1.

The apparatus 1 (i.e. its microcontroller) can dedicate a part of its internal memory (including the bootload section) to host the client to the server and provide the functionality for performing the above-described methods, for example method 100. The bootload memory part will remain static.

The apparatus 1 can allows In-System Programming (ISP), and can be remotely resettable.

In some examples, there are two main commands from the server to the apparatus 1:
RESET: load new code in the microcontroller memory of the apparatus 1 and reset the microcontroller;
DETECT: run DTIS (Duck-Typing Instruction Set) and report results.

The DETECT command controls candidate-specific signaling 9 on the one or more electrical connections 5 to provide one or more commands in a form specific to a candidate 23 for the attachment 3. On DETECT command, the microcontroller 7 receives and runs a DTIS (Duck-Typing Instruction Set) in order to detect potential new hardware attachments 3 and reports the results to the server 17.

The RESET command causes loading of attachment-specific code 13 at the microcontroller 7, dependent upon the identity of the attachment 3 to configure the apparatus 1 to access one or more functions of the attachment 3 not accessible without the attachment-specific code. On RESET command, the microcontroller 7 receives and loads new attachment-specific code 13 and eventually resets itself, this operation is required to update the apparatus 1 functionalities, for example by updating the internal code and adding new libraries.

With these two commands, a low-power computational apparatus 1 can be updated and upgraded (with new hardware attachments 3) automatically or manually (user-initiated).

A Duck-Typing Instruction Set (DTIS) is a specific procedure including a low-level sequence (electrical signals) defined for a given microcontroller 7 and a piece of hardware to be tested (such as a sensor) for identification/typing purpose.

In at least some examples, the DTIS object exchanged between the server 17 and the apparatus 1 using the DETECT command comprises:
- an apparatus target name (the microcontroller identifier the following instructions must be executed onto)
- a DTIS sequence number (a handle for communication with server 17)
- a list of microcontroller-specific commands to operate on I/O pins. This defines the candidate-specific signaling 9 on the one or more electrical connections 5 to provide one or more commands in a form specific to a candidate 23 for the attachment 3. The commands can be characterized by a type (in-out-pwm-analog-digital), a value, a timing and a target (cf. microcontroller pinout identifiers))
- the expected response 51 (range, Boolean, sequence).

The apparatus 1 can detect activity on free I/O pins and report it to the server 17 (these steps may be replaced by a user-initiated installation request, from the Hub). Then the server 17 either uses its local data to select corresponding DTIS candidates (for the given microcontroller) or may fetch data from an external database.

Once the candidates are selected, a DETECT command is sent to the apparatus 1 as a response to the initial request, carrying a set of DTIS (wrt. memory restrictions) in order to "probe" the new hardware attachment 3. On reception of the DETECT command, the DTIS object(s) are executed by the apparatus 1.

The apparatus 1 sequentially tests the hardware attachment 3 by running the DTIS. The apparatus 1 controls candidate-specific signaling 9 on the one or more electrical connections 5 to provide one or more commands in a form specific to a candidate 23 for the attachment 3.

Each response 11 by the attachment 3 to candidate-specific signaling 9 is tested against a respective expected response 51 and a confirmation of the hardware attachment 3 identity is immediately notified to the server 17 (positive feedback).

Additional candidate 23 tests (DTIS) may be requested to the server 17, e.g. loT Hub, until a positive feedback from the new hardware attachment 3 is observed, that is, for example, that the response 11 from the hardware attachment 3 matches the expected response 51.

A positive match is notified to the server 17 so it can trigger the RESET command carrying the new client code (hardware driver + reporting code). The server 17 loads the new client code 13 and resets the microcontroller of the apparatus 1, the new hardware attachment 3 is then able to communicate with the apparatus 1 which can report the new data to the server 17.

The test result (positive feedback) is sent to the server 17, but the whole test (set of instructions as described by the DTIS) is preferably carried out by the apparatus 1 because of the very strict timings required by the low-level signaling protocols (microseconds intervals).

It will be appreciated that the foregoing examples enable dynamic upgrade of a functionally limited apparatus 1 that, for example, uses a microcontroller without an operating system rather than a microcomputer with operating system.

This brings flexibility to low-power computational apparatuses 1 with a lightweight mechanism located within the microcontroller to detect and install new one or more hardware extensions, such as one or more attachments devices 3.

This significantly reduces the cost of deploying an upgradable loT ecosystem. loT devices (apparatus 1) will be reusable and will evolve and adapt to their environment with the possibility to update by adding one or more hardware extensions (i.e. an attachment device 3), while keeping cheap microcontroller-enabled assets. The solution is ecological with more multi-function apparatuses 1, less power consumption, and less bandwidth use. The solution enables loT ecosystems to evolve existing assets instead of growing by adding or replacing assets. The solution offers greater security as apparatus 1 can be updated to fix bugs and various security flaws.

The apparatus 1 can be, or can be used in, a "smart" home appliance (such as refrigerator, washing machine, or coffee maker, etc.) and/or a house, vehicle, loT device, industrial process device, etc. or any device as a part of the aforementioned, such as door, alarm system, shutters, electrical motor, valve, sensor, camera, etc., which could be dynamically enhanced with one or more extra physical/software capabilities by simply plugging a right extension hardware module, such as the attachment device 3, on an exposed electrical connector interface 4 of an apparatus 1. Then apparatus 1, augmented with the connected hardware attachment 3, can detect and install the required firmware 13. This can enable new functionalities at the apparatus 1 based on one or more defined functionalities of the attachment device 3. For example, the refrigerator will be able to scan and report stored products; the washing machine will be able to measure the water hardness by a water hardness sensor; the coffee maker will play music by a loudspeaker; the NFC-enabled door will connect with Bluetooth too by a Bluetooth communication device; the alarm system will be enriched with an IR-camera; the shutters will be controlled by a light detector, the vehicle will be enriched with a LIDAR (Light Detection and Ranging) device, etc.

The apparatus 1 can also be used in Industrial-loT. The ability to easily and dynamically enhance connected pieces of hardware (e.g. sensors, actuators) could be used to reconfigure large fleets of robots / things, and timely match their capabilities to the specific needs of a given production line.

The server 17 can be logically hosted on a local loT Hub/server. However, the server 17 could also be running on the end-user device (e.g. smartphone, laptop, tablet, vehicle) and support an operator who is interacting/enhancing devices on the field.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The attachment 3 can be a hardware module.

In one example, an apparatus comprises means for:
forming one or more electrical connections with an attachment;
controlling candidate-specific signaling on the one or more electrical connections; providing, based on the controlling, one or more commands in a form specific to a candidate for the attachment;
confirming, based on a response of the attachment to the candidate-specific signaling, an identity of the attachment as the candidate for the attachment;
loading attachment-specific code, dependent upon the identity of the attachment, and configuring the apparatus to access one or more functions of the attachment.

In one example, an apparatus comprises means for:
forming one or more electrical connections with an attachment;
controlling signaling on the one or more electrical connections;
providing, based on the controlling, one or more commands in a form specific to a candidate for the attachment;
detecting a response of the attachment to the signaling,
enabling, based on the detection, identification of the attachment from amongst candidates for the attachment; and
loading attachment-specific code, identified using the response, which configures the apparatus to access functions of the attachment.

In one example, a method comprises:
controlling candidate-specific signaling on one or more electrical connections, formed between an apparatus and an attachment;
providing, based on the controlling, one or more commands in a form specific to a candidate for the attachment;
confirming, based on a response of the attachment to the candidate-specific signaling, an identity of the attachment as the candidate for the attachment; and loading attachment-specific code, dependent upon the identity of the attachment, to configure the apparatus to access one or more functions of the attachment.

In one example, a computer program, when run on a computer, performs:
controlling candidate-specific signaling on one or more electrical connections, formed with an attachment;
providing based on the controlling, one or more commands in a form specific to a candidate for the attachment;
confirming, based on a response of the attachment to the candidate-specific signaling, an identity of the attachment as the candidate for the attachment; and loading attachment-specific code, dependent upon the identity of the attachment, to configure the computer to access functions of the attachment.

In one example, a system comprises:
an apparatus;
an attachment for physical connection to the apparatus;
a server, connected to the apparatus, comprising means for transferring attachment-specific code to the apparatus;
the apparatus, connected to the attachment and the server, comprising means for:
   forming one or more physical connections between the apparatus and the attachment for electrical signaling;
   at the server or the apparatus, means for determining a candidate for the attachment from a pool of candidates for the attachment;
   at the apparatus, means for controlling candidate-specific signaling to the attachment on the one or more electrical connections to provide one or more commands to the attachment in a form specific to the determined candidate for the attachment, the form being unique amongst the pool of candidates for the attachment;
   at the apparatus, means for detecting a response of the attachment to the candidate-specific signaling;
   at the server and/or the apparatus, means for determining if the response of the attachment to the candidate-specific signaling matches an expected response of the candidate for the attachment to the candidate-specific signaling and, if so, identifying the attachment as the candidate for the attachment;
   at the server, means for identifying attachment-specific code dependent upon the identification of the attachment as the candidate for the attachment and providing the attachment-specific code to the apparatus; and
   at the apparatus, means for loading the provided attachment-specific code to configure the apparatus to access one or more functions of the attachment.

In one example, a server system for enabling transfer of attachment-specific code to one or more apparatuses comprises means for:
communicating separately with one or more apparatuses configured to form one or
more physical connections between the respective apparatus and a respective attachment for electrical signaling between the respective apparatus and the respective attachment;
determining, at the server a pool of candidates for the attachment or a candidate for the attachment from a pool of candidates for the attachment;
providing candidate-specific signaling to the apparatus for the determined candidate for the attachment or for each candidate for the attachment in the determined pool of attachments, each candidate-specific signaling comprising one or more commands in a form specific to the determined candidate for the attachment,
providing candidate-specific expected responses to the candidate-specific signaling to the apparatus for the determined candidate for the attachment or for candidate for the attachment in the determined pool of attachments, each candidate-specific expected response enabling determination at the apparatus if a response of the attachment to the respective candidate-specific signaling matches a respective expected response of the candidate for the attachment to the candidate-specific signaling to identify the attachment as the candidate for the attachment;
receiving from the apparatus attachment-specific signaling identifying the attachment; accessing attachment-specific code dependent upon the identification of the attachment and providing the attachment-specific code to the apparatus to cause the apparatus to load the provided attachment-specific code to configure the apparatus to access one or more functions of the attachment.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
forming one or more electrical connections with an attachment;
controlling candidate-specific signaling on the one or more electrical connections to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the apparatus to access one or more functions of the attachment.

2. The apparatus according to claim 1, wherein the candidate-specific form of the one or more commands is unique to a pool of a plurality of candidate attachments.

3. The apparatus according to claim 1 or 2, wherein the means are further configured to perform determining if the response of the attachment to the candidate-specific signaling matches an expected response of the candidate for the attachment to the one or more commands.

4. The apparatus according to any preceding claim, wherein the means are further configured to perform identifying the attachment as the candidate if the response of the attachment to the candidate-specific signaling matches an expected response of the candidate for the attachment to the one or more commands,

5. The apparatus according to any preceding claim, wherein the means are further configured to perform controlling the candidate-specific signaling on the one or more electrical connections to provide one or more commands in a form specific to a different candidate for the attachment, if the response of the attachment to the candidate-specific signaling does not match an expected response of the candidate for the attachment to the one or more commands.

6. The apparatus according to any preceding claim, wherein the means are further configured to perform communicating with a server to obtain, from the server, the attachment-specific code which, when loaded, configures the apparatus to access functions of the attachment.

7. The apparatus according to claim 6, wherein the means are further configured to perform receiving, from the server, instructions indicating the form of the one or more commands which is specific to the candidate for the attachment.

8. The apparatus according to any of claims 6 to 7, wherein the means are further configured to perform:
receiving, from the server, an expected response of the candidate for the attachment to the one or more commands;
comparing the response of the attachment to the candidate-specific signaling, with the expected response; and
reporting a result of the comparison to the server to enable the server to identify the attachment-specific code.

9. The apparatus according to any preceding claim, wherein the means are further configured to perform detecting that one or more electrical connections with an attachment have been formed and controlling candidate-specific signaling on the one or more electrical connections in response.

10. The apparatus according to any preceding claim wherein the candidates for the attachment are based upon one or more of:
user input indicating a category of the attachment;
number of electrical connections formed with the attachment;
states of the one or more electrical connections; or
a protocol used by the attachment.

11. The apparatus according to any preceding claim wherein the means comprises at least one processor; and
at least one memory including computer program code, the at least one memory and computer program code configured to, with the at least one processor, cause the performance of the apparatus.

12. A method comprising:
controlling candidate-specific signaling on one or more electrical connections, formed between an apparatus and an attachment, to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the apparatus to access one or more functions of the attachment.

13. Executable code that, when run on a computer, performs:
controlling candidate-specific signaling on one or more electrical connections, formed with an attachment, to provide one or more commands in a form specific to a candidate for the attachment;
confirming, based on a response of the attachment to the candidate-specific signaling, an identity of the attachment as the candidate for the attachment; and
loading attachment-specific code, dependent upon the identity of the attachment, to configure the computer to access functions of the attachment.

14. A system comprising:
an apparatus;
a server shared by the apparatus and other apparatuses for enabling transfer of attachment-specific code to the apparatus and the other apparatuses;
an attachment for physical connection to the apparatus;
the system comprising means for:
forming one or more physical connections between the apparatus and the attachment for electrical signaling;
determining, at the server or the apparatus, a candidate for the attachment from a pool of candidates for the attachment;
at the apparatus, controlling candidate-specific signaling to the attachment on the one or more electrical connections to provide one or more commands to the attachment in a form specific to the determined candidate for the attachment, the form being unique amongst the pool of candidates for the attachment;
at the apparatus, detecting a response of the attachment to the candidate-specific signaling;
at the server and/or the apparatus, determining if the response of the attachment to the candidate-specific signaling matches an expected response of the candidate for the attachment to the candidate-specific signaling and, if so, identifying the attachment as the candidate for the attachment;
at the server, identifying attachment-specific code dependent upon the identification of the attachment as the candidate for the attachment and providing the attachment-specific code to the apparatus; and
at the apparatus, loading the provided attachment-specific code to configure the apparatus to access one or more functions of the attachment.

15. A server apparatus system for enabling transfer of attachment-specific code to apparatuses comprising:
means for communicating separately with multiple apparatuses configured to form one or more physical connections between the respective apparatus and a respective attachment for electrical signaling between the respective apparatus and the respective attachment;
determining, at the server a pool of candidates for the attachment or a candidate for the attachment from a pool of candidates for the attachment;
providing candidate-specific signaling to the apparatus for the determined candidate for the attachment or for each candidate for the attachment in the determined pool of attachments, each candidate-specific signaling comprising one or more commands in a form specific to the determined candidate for the attachment,
providing candidate-specific expected responses to the candidate-specific signaling to the apparatus for the determined candidate for the attachment or for each candidate for the attachment in the determined pool of attachments, each candidate-specific expected response enabling determination at the apparatus if a response of the attachment to the respective candidate-specific signaling matches a respective expected response of the candidate for the attachment to the candidate-specific signaling to identify the attachment as the candidate for the attachment;
receiving from the apparatus attachment-specific signaling identifying the attachment;
accessing attachment-specific code dependent upon the identification of the attachment and providing the attachment-specific code to the apparatus to cause the apparatus to load the provided attachment-specific code to configure the apparatus to access one or more functions of the attachment.
